# EUROPEAN PATENT APPLICATION

(11) **EP 4 574 878 A1**
(43) Date of publication of application: **25.06.2025**
(21) Application number: 23854888.7
(22) Date of filing: 15.08.2023
(51) Int. Cl.: C08G 61/04

(54) **FLUOROALKENE COPOLYMER**

(30) Priority: 15.08.2022 JP 2022129402; 31.10.2022 JP 2022175052
(71) Applicant: AGC INC., Chiyoda-ku, Tokyo 1008405 (JP); The University of Tokyo, Bunkyo-ku, Tokyo 113-8654 (JP)
(72) Inventor: KASHIWAGI, Kimiaki, Tokyo 100-8405 (JP); OKAZOE, Takashi, Tokyo 100-8405 (JP); SUGIYAMA, Norihide, Tokyo 100-8405 (JP); AKIYAMA, Midori, Tokyo 113-8654 (JP); KOHATA, Ai, Tokyo 113-8654 (JP); MASUDA, Junki, Tokyo 113-8654 (JP); OKUDA, Mizuki, Tokyo 113-8654 (JP)
(74) Representative: Müller-Boré & Partner Patentanwälte PartG mbB
(86) International application number: PCT/JP2023/029498
(87) International publication number: WO 2024/038854

(57) **Abstract**

The present invention is a copolymer having a structure represented by a general formula (1) [in the formula, R¹ is a fluorine atom, or a perfluoroalkyl group or perfluoroalkoxy group having 1 to 10 carbon atoms which may have -O- between carbon atoms; R² and R³ each independently represent a hydrogen atom, a halogen atom, an aliphatic hydrocarbon group having 1 to 30 carbon atoms which may have a substituent, or an aryl group which may have a substituent; the R² and R³ may be linked with each other to form a ring; the aliphatic hydrocarbon group may contain one or more selected from the group consisting of -O-, -Si(CH₃)₂-, -CO-, and -NH- between carbon atoms; x and y are positive numbers satisfying a relationship of x + y = 1; and a filled circle represents a bond].

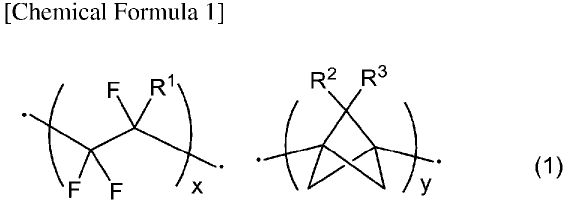

## Description

### TECHNICAL FIELD

The present invention relates to a novel copolymer using a fluoroalkene and its derivative as monomers, and a method for producing this copolymer.

Priority is claimed on Japanese Patent Application No. 2022-129402, filed August 15, 2022 and Japanese Patent Application No. 2022-175052, filed October 31, 2022, the contents of which are incorporated herein by reference.

### BACKGROUND ART

Fluorine atoms have high electronegativity, and are small, similar to hydrogen atoms. Due to this characteristic, fluorine atoms can bond stably with many atoms, and organic compounds into which fluorine has been introduced tend to have improved heat resistance, chemical resistance, light resistance, water resistance, and the like compared to those prior to the introduction. For example, by blending a fluorine-containing monomer with a monomer raw material of a resin, it is also possible to impart various resistances such as heat resistance, chemical resistance, light resistance, and water resistance to the resin.

Polytetrafluoroethylene (hereinafter also referred to as PTFE) is used in various applications due to its excellent properties. In this case, a method is known in which PTFE is modified using a monomer copolymerizable with tetrafluoroethylene (hereinafter also referred to as TFE) in order to improve the characteristics of PTFE resin or impart new characteristics. For example, Patent Document 1 discloses a modified PTFE fine powder obtained by copolymerizing perfluoro(alkyl)ethylene and fluoro(alkyl vinyl ether) with TFE. Further, Patent Document 2 discloses a copolymer obtained by adding a compound in which an ethereal oxygen atom has been introduced between the carbon atoms in perfluoro(alkyl)ethylene as a monomer together with perfluoro(alkyl)ethylene in order to improve the molding physical properties in paste extrusion molding.

In copolymers, the alternation of polymerization is an important index related to the uniformity and density of functional group introduction, and has a significant effect on the physical properties of the obtained polymer. As examples of alternating copolymerization of fluoroalkenes with other monomers, for example, polymerization examples of simple alkenes with vinyl ethers (Non Patent Document 3) such as TFE with ethylene (Non Patent Document 1) and TFE with propylene (Non Patent Document 2) have been known. However, TFE rarely exhibits alternation with other monomers. A similar tendency is observed for fluoroalkenes other than TFE, and in alternating copolymerization using fluoroalkenes, there have been significant restrictions on the selection of copolymerizable monomers.

[1.1.1] Propellane (hereinafter sometimes simply referred to as "propellane") is known to have a highly distorted structure and cause a reaction with various anion species, radical species, and cation species.

A method for synthesizing propellane with no substituent is shown in Non Patent Document 4. In addition, a method for synthesizing propellane having a substituent is shown in Non Patent Document 5, and in particular, a method for synthesizing propellane having a methoxymethyl group as a substituent is shown in Non Patent Document 6.

According to Non Patent Document 7, in 1988, a homopolymer of propellane was synthesized for the first time by Michl and others, and was shown to be a highly crystalline polymer with a thermal decomposition temperature of 290°C that was insoluble in solvents. However, because it was insoluble in solvents, it was difficult to perform detailed polymer analysis. Accordingly, as shown below, Non Patent Documents 8 to 10 report examples in which the solubility in solvents was improved by introducing a substituent into propellane and carrying out polymerization. 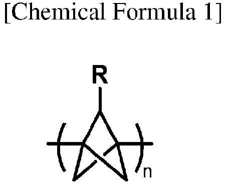 R = H, *ⁿ*C₅H₁₁ , C₂H₅OCH₃OCH₃, C₃H₆OCH₃ etc

In 1990, copolymerization of propellane also began to be reported, and alternating copolymerization with electron-deficient monomers was particularly attracting attention. For example, Non Patent Documents 11 to 13 report alternating copolymers such as those shown below.

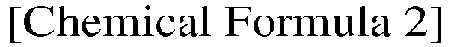

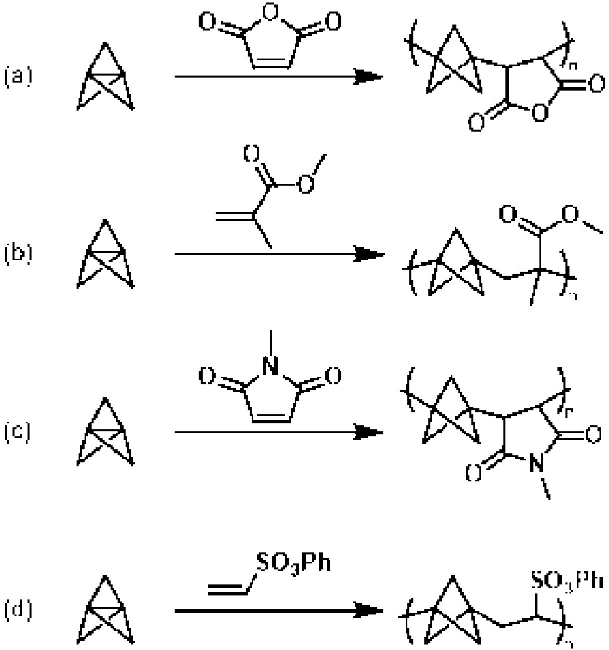

### Citation List

### Patent Documents

Patent Document 1: Published Japanese Translation No. Hei 11-509245 of the PCT International Publication
Patent Document 2: International Patent Publication No. 2018/221518 Non Patent Documents

Non Patent Document 1: Naberezhnykh, et al., Bulletin of the Academy of Sciences of the USSR. Division of Chemical Science, 1974, vol.23 (1), p.227-228.
Non Patent Document 2: Kostov, et al., Journal of Polymer Science Part A: Polymer Chemistry, 1992, vol.30(6), p.1083-1088.
Non Patent Document 3: Hikita, et al., Journal of Polymer Science Part A-1: Polymer Chemistry Edition, 1972, vol.10(10), p.2941-2949.
Non Patent Document 4: Mondanaro and Dailey, Organic Syntheses, Collective volume, 2004, vol.10, p.658.
Non Patent Document 5: Werner et al., Liebigs Annalen, 1996, vol.11, p,1705-1715.
Non Patent Document 6: Klopsch and Schlueter, Tetrahedron, 1995, vol.51(38), p.10491-10496.
Non Patent Document 7: Kaszynski and Michl, Journal of the American Chemical Society, 1988, vol.110(15), p.5225-5226.
Non Patent Document 8: Opitz and Schlueter, Angewandte Chemie International Edition English, 1989, vol.28(4), p.456-458.
Non Patent Document 9: Freudenberger et al., The Journal of Organic Chemistry, 1993, vol.58(23), p.6497-6498.
Non Patent Document 10: Lassale et al., Acta Polymerica, 1994, vol.45(5), p.389-391.
Non Patent Document 11: Gosau and Schlueter, Chemische Berichte, 1990, vol.123(12), p.2449-2451.
Non Patent Document 12: Reddy et al., Macromolecules 1991, vol.24(13), p.3973-3974.
Non Patent Document 13: Gosau, et al., Polymer Bulletin, 1991, vol.25(3), p.293-297.
Non Patent Document 14: Fox and Zisman, Journal of Colloid Science. 1950, vol.5(6), p.514-531.
Non Patent Document 15: Matsunaga, et al., Angewandte Chemie International Edition, 2021, vol.60(5), p.2578-2582.

### SUMMARY OF INVENTION

### Technical Problem

An object of the present invention is to provide a novel copolymer using a fluoroalkene and its derivative as monomers, and a method for producing this copolymer.

### Solution to Problem

The inventors of the present invention have found that a novel copolymer with high alternation in copolymerization can be obtained by using a fluoroalkene as an electron-deficient monomer copolymerized with propellane, and have completed the present invention.

That is, the present invention is as follows.
[1] A fluoroalkene copolymer having a structure represented by the following general formula (1): 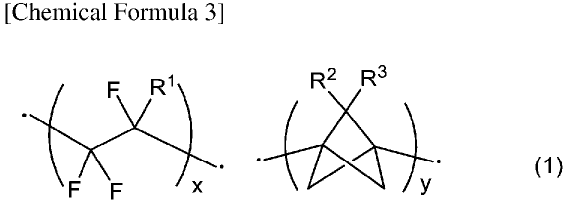 [in the formula, R¹ is a fluorine atom, a perfluoroalkyl group having 1 to 10 carbon atoms which may have -O- between carbon atoms, or a perfluoroalkoxy group having 1 to 10 carbon atoms which may have -O- between carbon atoms; R² and R³ each independently represent a hydrogen atom, a halogen atom, an aliphatic hydrocarbon group having 1 to 30 carbon atoms which may have a substituent, or an aryl group which may have a substituent; the aforementioned R² and R³ may be linked with each other to form a ring; the aforementioned aliphatic hydrocarbon group may contain one or more selected from the group consisting of -O-, -Si(CH₃)₂-, -CO-, and -NH- between carbon atoms; x and y represent a proportion of each monomer contained (x + y = 100(%), x and y are each in ranges of 10 ≤ x, y ≤ 90); and a filled circle represents a bond].
[2] The fluoroalkene copolymer according to [1] above, wherein the aforementioned R² and R³ are both hydrogen atoms.
[3] The fluoroalkene copolymer according to [1] or [2] above, wherein the aforementioned R¹ is a fluorine atom or a perfluoroalkoxy group having 1 to 10 carbon atoms and having -O- between carbon atoms.
[4] A method for producing a fluoroalkene copolymer, the method including producing a fluoroalkene copolymer having a structure represented by the following general formula (1) by subjecting a compound represented by the following general formula (2): 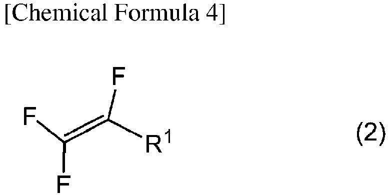
   [in the formula, R¹ is a fluorine atom, a perfluoroalkyl group having 1 to 10 carbon atoms which may have -O- between carbon atoms, or a perfluoroalkoxy group having 1 to 10 carbon atoms which may have -O- between carbon atoms]
   and a compound represented by the following general formula (3): 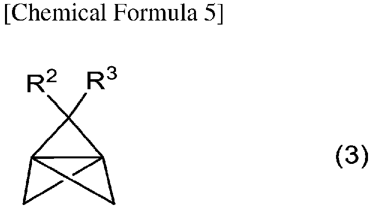
   [in the formula, R² and R³ each independently represent a hydrogen atom, a halogen atom, an aliphatic hydrocarbon group having 1 to 30 carbon atoms which may have a substituent, or an aryl group which may have a substituent; the aforementioned R² and R³ may be linked with each other to form a ring; and the aforementioned aliphatic hydrocarbon group may contain one or more selected from the group consisting of -O-, - Si(CH₃)₂-, -CO-, and -NH- between carbon atoms]
   to radical polymerization 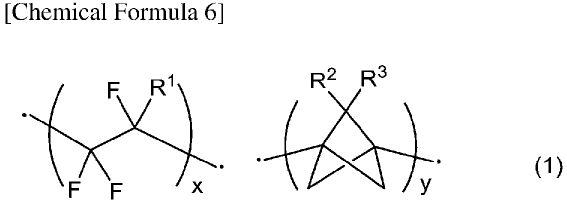
   [in the formula, R¹, R², and R³ are the same as defined above; x and y represent a proportion of each monomer contained (x + y = 100(%), x and y are in ranges of 10 ≤ x, y ≤ 90), respectively; and a filled circle represents a bond].
[5] The method for producing a fluoroalkene copolymer according to [4] above, wherein the aforementioned radical polymerization is carried out at -30°C or lower.

### Advantageous Effects of Invention

According to the present invention, it is possible to obtain a novel copolymer using a fluoroalkene and its derivative as monomers.

### BRIEF DESCRIPTION OF DRAWINGS

[FIG. 1] A diagram showing ¹³C NMR (100 MHz, CDCl₃) spectrum data for a copolymer 2 obtained in Example 2.
[FIG. 2] A diagram showing the results of thermogravimetric measurement conducted for each polymer synthesized in Comparative Example 1, Example 1, Example 2, and Example 3.
[FIG. 3] A diagram showing ¹⁹F NMR (376 MHz, CDCl₃) spectrum data for a copolymer 3 synthesized in Example 3 and a polymer 2 synthesized in Comparative Example 2.
[FIG. 4] A diagram obtained by plotting, respectively, the cosine (cos) value of the measured contact angle for each hydrocarbon solvent on the vertical axis and the literature value of the surface tension (γL) (dyn/cm) of this hydrocarbon solvent on the horizontal axis for the resin film of copolymer 3 in Example 3.
[FIG. 5] A diagram obtained by measuring vapor pressure at each concentration for Fomblin 4000 (A) (for calibration) and copolymer 3 (B) in Example 3 and plotting the measurement data with the horizontal axis representing the concentration and the vertical axis representing the [vapor pressure]/[concentration] value at each concentration.
[FIG. 6] A diagram showing an XPS spectrum of fluorine (A), an XPS spectrum of carbon (B), and an XPS spectrum of oxygen (C) of a thin film of copolymer 3 in Example 3.
[FIG. 7] A diagram showing the results of thermogravimetric measurement conducted for each polymer synthesized in Comparative Example 1, Example 3, and Example 4.
[FIG. 8] A diagram showing the results of powder X-ray measurement conducted for each polymer synthesized in Comparative Example 1, Example 1, Example 3, and Example 4.
[FIG. 9] A diagram showing the results of contact angle measurement conducted for copolymer 4 synthesized in Example 4.
[FIG. 10] A diagram showing the results of UV-VIS measurement conducted for a copolymer synthesized in Example 3.

### DESCRIPTION OF EMBODIMENTS

In the present invention and the specification of the present application, a "unit based on a monomer" is a generic term for an atomic group formed directly by polymerization of one molecule of the monomer, and an atomic group obtained by chemically converting a portion of this directly formed atomic group. A unit based on a monomer is also simply referred to as a unit. The content (% by mass) of each unit with respect to the total units contained in a polymer is determined by analyzing the polymer by solid-state nuclear magnetic resonance spectroscopy (NMR), but can be estimated from the amount of each monomer charged. Usually, the content of each unit calculated from the amount of each monomer charged substantially coincide with the actual content of each unit.

In the present invention and the specification of the present application, a numerical range represented using a symbol "-" means a range that includes numerical values described before and after this symbol "-" as the lower limit and upper limit values.

In the present invention and the specification of the present application, "Cₚ₁₋ₚ₂" (p1 and p2 are positive integers satisfying a relationship of p1 < p2) means a group in which the number of carbon atoms is from p1 to p2.

In the present invention and the specification of the present application, "a group which may have a substituent" includes both a group which has no substituent and a group which has a substituent.

Further, in the following, a "compound (n)" refers to a compound represented by a formula (n).

In the present invention and the specification of the present application, the term "C₁₋₃₀ aliphatic hydrocarbon group" includes all of a C₁₋₃₀ alkyl group which may have a substituent, a C₂₋₃₀ alkenyl group which may have a substituent, and a C₂₋₃₀ alkynyl group which may have a substituent. A "C₁₋₃₀ aliphatic hydrocarbon group" may be a linear group, a branched group, or a cyclic group.

In the present invention and the specification of the present application, a "Cₚ₁₋ₚ₂ aliphatic hydrocarbon group having a substituent" refers to a group in which one or more, preferably 1 to 3, hydrogen atoms bonded to a carbon atoms of the Cₚ₁₋ₚ₂ aliphatic hydrocarbon group have been substituted with other functional groups. When two or more substituents are present, the substituents may be the same as or different from each other.

In the present invention and the specification of the present application, a "C₁₋₃₀ alkyl group" is an alkyl group having 1 to 30 carbon atoms, and may be linear or branched, or may be a group containing a cyclic structure. Examples of the C₁₋₃₀ alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a heneicosyl group, a docosyl group, a tricosyl group, a tetracosyl group, a pentacosyl group, a hexacosyl group, a heptacosyl group, an octacosyl group, a nonacosyl group, a triacontyl group, a cyclopropyl group, a cyclobutyl group, a cyclopentyl group, a cyclohexyl group, a cycloheptyl group, and a cyclooctyl group.

In the present invention and the specification of the present application, a "C₁₋₁₀ alkyl group" is an alkyl group having 1 to 10 carbon atoms, and may be linear or branched, or may be a group containing a cyclic structure. A "C₂₋₁₀ alkyl group" is an alkyl group having 2 to 10 carbon atoms, and may be linear or branched. Examples of the C₁₋₁₀ alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, a heptyl group, an octyl group, a nonyl group, a decyl group, a cyclopropyl group, a cyclobutyl group, a cyclopentyl group, a cyclohexyl group, a cycloheptyl group, and a cyclooctyl group.

In the present invention and the specification of the present application, a "C₁₋₆ alkyl group" is an alkyl group having 1 to 6 carbon atoms, and may be linear or branched, or may be a group containing a cyclic structure. Examples of the C₁₋₆ alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, a cyclopropyl group, a cyclobutyl group, a cyclopentyl group, and a cyclohexyl group.

In the present invention and the specification of the present application, a "Cₚ₁₋ₚ₂ alkyl group having a substituent" refers to a group in which one or more, preferably 1 to 3, hydrogen atoms bonded to a carbon atom of the Cₚ₁₋ₚ₂ alkyl group have been substituted with other functional groups. When two or more substituents are present, the substituents may be the same as or different from each other.

Examples of the C₂₋₃₀ alkenyl group include a group obtained by replacing at least one single bond between carbon atoms in the groups listed as the C₂₋₃₀ alkyl groups with a double bond. Specific examples of the C₂₋₃₀ alkenyl group include a vinyl group, a propenyl group, a 2-propenyl group, a butenyl group, a 1-methylpropenyl group, a 2-methylpropenyl group, a pentenyl group, a hexenyl group, a heptenyl group, an octenyl group, a nonenyl group, a decenyl group, a cyclobutenyl group, a cyclopentenyl group, and a cyclohexenyl group.

In the present invention and the specification of the present application, a "Cₚ₁₋ₚ₂ alkenyl group having a substituent" refers to a group in which one or more, preferably 1 to 3, hydrogen atoms bonded to a carbon atom of the Cₚ₁₋ₚ₂ alkenyl group have been substituted with other functional groups. When two or more substituents are present, the substituents may be the same as or different from each other.

Examples of the C₂₋₃₀ alkynyl group include a group obtained by replacing at least one single bond between carbon atoms in the groups listed as the C₂₋₃₀ alkyl groups with a triple bond. Specific examples of the C₂₋₃₀ alkynyl group include an ethynyl group, a propynyl group, a butynyl group, a pentynyl group, a heptynyl group, an octynyl group, a nonynyl group, and a decynyl group.

In the present invention and the specification of the present application, a "Cₚ₁₋ₚ₂ alkynyl group having a substituent" refers to a group in which one or more, preferably 1 to 3, hydrogen atoms bonded to a carbon atom of the Cₚ₁₋ₚ₂ alkynyl group have been substituted with other functional groups. When two or more substituents are present, the substituents may be the same as or different from each other.

In the present invention and the specification of the present application, an "aryl group" refers to a cyclic group having aromaticity, and is a group in which the ring is composed only of carbon atoms.

In the present invention and the specification of the present application, a "C₆₋₁₄ aryl group" is an aromatic hydrocarbon group having 6 to 14 carbon atoms, and a C₆₋₁₂ aryl group is particularly preferred. Examples of the C₆₋₁₄ aryl group include a phenyl group, a naphthyl group, an anthryl group, and a 9-fluorenyl group, and a phenyl group is particularly preferred.

In the present invention and the specification of the present application, an "aryl group having a substituent" refers to a group in which one or more, preferably 1 to 3, hydrogen atoms bonded to a carbon atom of the aryl group have been substituted with other functional groups. When two or more substituents are present, the substituents may be the same as or different from each other. Examples of the substituent include a C₁₋₆ alkyl group, a C_{S-6} alkenyl group, a C₁₋₆ alkoxy group, a C₁₋₆ alkylthio group, a halogen atom (a fluorine atom, a chlorine atom, a bromine atom, or an iodine atom), an aldehyde group, a C₁₋₁₀ acyl group, and a C₆₋₁₄ aryl group which may have a substituent. Examples of the "C₆₋₁₄ aryl group which may have a substituent" include a phenyl group, a naphthyl group, an anthryl group, a 2-methylphenyl group, a 4-methylphenyl group, a 3,5-dimethylphenyl group, a 2,6-dimethylphenyl group, a 2,4-dimethylphenyl group, a 2-trifluoromethylphenyl group, a 2-methoxyphenyl group, a 4-methoxyphenyl group, a 2,4-dimethoxyphenyl group, a 3,5-dimethoxyphenyl group, a 2-methylthiophenyl group, a 4-methylthiophenyl group, a 2,4-dimethylthiophenyl group, a 3,5-dimethylthiophenyl group, a 4-chlorophenyl group, and a 4-bromophenyl group.

A fluoroalkene copolymer according to the present invention is a copolymer produced using a fluoroalkene compound represented by the following general formula (2) and a propellane compound represented by the following general formula (3) as monomers, and has a structure represented by the following general formula (1). In the general formula (1), a filled circle indicates a bond.

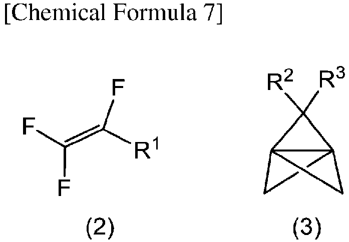

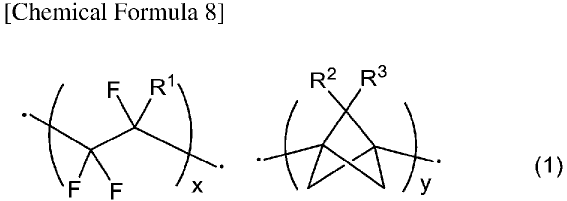

In the general formulas (1) and (2), R¹ is a fluorine atom, a C₁₋₁₀ perfluoroalkyl group which may have -O- between carbon atoms, or a C₁₋₁₀ perfluoroalkoxy group which may have -O- between carbon atoms. Of these groups, the C₁₋₁₀ perfluoroalkyl group and the C₁₋₁₀ perfluoroalkoxy group may be linear or branched.

In the general formulas (1) and (2), when R¹ is a C₁₋₁₀ perfluoroalkyl group that does not have -O- between carbon atoms, R¹ is preferably a C₁₋₆ perfluoroalkyl group, more preferably a C₂₋₆ perfluoroalkyl group, still more preferably a C₂₋₄ perfluoroalkyl group, and even more preferably a perfluoroethyl group, a perfluoro-n-propyl group, a perfluoroisopropyl group, a perfluoro-n-butyl group, a perfluoro-n-butyl group, a perfluoroisobutyl group, or a perfluoro-t-butyl group.

In the general formulas (1) and (2), when R¹ is a C₁₋₁₀ perfluoroalkoxy group that does not have -O- between carbon atoms, R¹ is preferably a C₁₋₆ perfluoroalkoxy group, more preferably a C₂₋₆ perfluoroalkoxy group, still more preferably a C₂₋₄ perfluoroalkoxy group, and even more preferably a perfluoroethoxy group, a perfluoro-n-propoxy group, a perfluoroisopropoxy group, a perfluoro-n-butoxy group, a perfluoro-n-butoxy group, a perfluoroisobutoxy group, or a perfluoro-t-butoxy group.

In the general formulas (1) and (2), when R¹ is a C₁₋₁₀ perfluoroalkyl group having -O- between carbon atoms or a C₂₋₁₀ perfluoroalkoxy group having -O- between carbon atoms, this group is preferably -(O)ₑ-(CₐF₂ₐ)-(O-C_{b}F_{2b})_{c}-C_{d}F_{2d+1} (wherein a, b, and d are integers of 1 or more, and c is an integer of 0 or more, which satisfy a relationship of a + b × c + d ≤ 10, and e is 0 or 1). When c is 0, -(O-C_{b}F_{2b})_{c}- represents a single bond. When e is 0, this group is a perfluoroalkyl group (-(CₐF₂ₐ)-(O-C₃F_{2b})_{c}-C_{d}F_{2d+1}), and when e is 1, this group is a perfluoroalkoxy group (-O-(CₐF₂ₐ)-(O-C₃F_{2b})_{c}-CaF_{2d+1}).

In -(O)ₑ-(CₐF₂ₐ)-(O-C₃F_{2b})_{c}-CaF_{2d+1}, -(CₐF₂ₐ)- may be a linear perfluoroalkylene group or a branched perfluoroalkylene group. -C_{b}F_{2b}- may be a linear perfluoroalkylene group or a branched perfluoroalkylene group. -C_{d}F_{2d+1} may be a linear perfluoroalkyl group or a branched perfluoroalkyl group.

In -(O)_{c}-(CₐF₂ₐ)-(O-C_{b}F_{2b})_{c}-C_{d}F_{2d+1}, a is preferably an integer from 1 to 4, more preferably an integer from 1 to 3, and still more preferably 2 or 3. b is preferably an integer from 1 to 4, and more preferably 1 or 2. c is preferably an integer from 0 to 6, and more preferably an integer from 0 to 4. d is preferably an integer from 1 to 6, more preferably an integer from 1 to 4, and still more preferably an integer from 1 to 3.

In the general formulas (1) and (2), R¹ is preferably a group, among those represented by -(O)_{c}-(CₐF₂ₐ)-(O-C_{d}F_{2b})_{c}-C_{d}F_{2d+1}, where c is 0 and the combinations of a, d, and e (a, d, e) are (2, 2, 0), (2, 3, 0), (2, 4, 0), (2, 5, 0), (2, 6, 0), (3, 2, 0), (3, 3, 0), (3, 4, 0), (3, 5, 0), (3, 6, 0), (4, 2, 0), (4, 3, 0), (4, 4, 0), (2, 2, 1), (2, 3, 1), (2, 4, 1), (2, 5, 1), (2, 6, 1), (3, 2, 1), (3, 3, 1), (3, 4, 1), (3, 5, 1), (3, 6, 1), (4, 2, 1), (4, 3, 1), or (4, 4, 1).

In the general formulas (1) and (2), R¹ is preferably a group, among those represented by -(O)_{c}-(CₐF₂ₐ)-(O-C_{b}F_{2b})_{c}-C_{d}F_{2d+1}, where c is 1 or more, and the combinations of a, b, c, d, and e (a, b, c, d, e) are (2, 1, 1, 1, 0), (2, 1, 1, 2, 0), (2, 1, 1, 3, 0), (2, 1, 1, 4, 0), (2, 1, 2, 1, 0), (2, 1, 2, 2, 0), (2, 1, 2, 3, 0), (2, 1, 2, 4, 0), (2, 1, 3, 1, 0), (2, 1, 3, 2, 0), (2, 1, 3, 3, 0), (2, 1, 3, 4, 0), (2, 1, 4, 1, 0), (2, 1, 4, 2, 0), (2, 1, 4, 3, 0), (2, 1, 4, 4, 0), (2, 2, 1, 1, 0), (2, 2, 1, 2, 0), (2, 2, 1, 3, 0), (2, 2, 1, 4, 0), (2, 2, 2, 1, 0), (2, 2, 2, 2, 0), (2, 2, 2, 3, 0), (2, 2, 2, 4, 0), (2, 2, 3, 1, 0), (2, 2, 3, 2, 0), (3, 1, 1, 1, 0), (3, 1, 1, 2, 0), (3, 1, 1, 3, 0), (3, 1, 1, 4, 0), (3, 1, 2, 1, 0), (3, 1, 2, 2, 0), (3, 1, 2, 3, 0), (3, 1, 2, 4, 0), (3, 1, 3, 1, 0), (3, 1, 3, 2, 0), (3, 1, 3, 3, 0), (3, 1, 3, 4, 0), (3, 2, 1, 1, 0), (3, 2, 1, 2, 0), (3, 2, 1, 3, 0), (3, 2, 1, 4, 0), (3, 2, 2, 1, 0), (3, 2, 2, 2, 0), (3, 2, 2, 3, 0), (3, 2, 3, 1, 0), (3, 3, 1, 1, 0), (3, 3, 2, 1, 0), (2, 1, 1, 1, 1), (2, 1, 1, 2, 1), (2, 1, 1, 3, 1), (2, 1, 1, 4, 1), (2, 1, 2, 1, 1), (2, 1, 2, 2, 1), (2, 1, 2, 3, 1), (2, 1, 2, 4, 1), (2, 1, 3, 1, 1), (2, 1, 3, 2, 1), (2, 1, 3, 3, 1), (2, 1, 3, 4, 1), (2, 1, 4, 1, 1), (2, 1, 4, 2, 1), (2, 1, 4, 3, 1), (2, 1, 4, 4, 1), (2, 2, 1, 1, 1), (2, 2, 1, 2, 1), (2, 2, 1, 3, 1), (2, 2, 1, 4, 1), (2, 2, 2, 1, 1), (2, 2, 2, 2, 1), (2, 2, 2, 3, 1), (2, 2, 2, 4, 1), (2, 2, 3, 1, 1), (2, 2, 3, 2, 1), (3, 1, 1, 1, 1), (3, 1, 1, 2, 1), (3, 1, 1, 3, 1), (3, 1, 1, 4, 1), (3, 1, 2, 1, 1), (3, 1, 2, 2, 1), (3, 1, 2, 3, 1), (3, 1, 2, 4, 1), (3, 1, 3, 1, 1), (3, 1, 3, 2, 1), (3, 1, 3, 3, 1), (3, 1, 3, 4, 1), (3, 2, 1, 1, 1), (3, 2, 1, 2, 1), (3, 2, 1, 3, 1), (3, 2, 1, 4, 1), (3, 2, 2, 1, 1), (3, 2, 2, 2, 1), (3, 2, 2, 3, 1), (3, 2, 3, 1, 1), (3, 3, 1, 1, 1), or (3, 3, 2, 1, 1).

In the general formulas (1) and (3), R² and R³ each independently represent a hydrogen atom, a halogen atom (a fluorine atom, a chlorine atom, a bromine atom, or an iodine atom), a C₁₋₃₀ aliphatic hydrocarbon group which may have a substituent, or an aryl group which may have a substituent. This C₁₋₃₀ aliphatic hydrocarbon group which may have a substituent may be a linear group, a branched group, or a cyclic group. Further, this C₁₋₃₀ aliphatic hydrocarbon group may contain one or more linking groups selected from the group consisting of -O-, -Si(CH₃)₂-, -CO-, and -NH- between carbon atoms. When two or more of these linking groups are contained, the multiple linking groups may be adjacent to each other and linked together. However, this does not include cases where two or more -O- are linked.

When R² and R³ are C₁₋₃₀ aliphatic hydrocarbon groups which may have a substituent, the C₁₋₃₀ aliphatic hydrocarbon group may be a C₁₋₃₀ alkyl group, a C₂₋₃₀ alkenyl group, or a C₂₋₃₀ alkynyl group. In the general formulas (1) and (3), R² or R³ is preferably a C₁₋₁₀ alkyl group which may have a substituent, a C₂₋₁₀ alkenyl group which may have a substituent, or a C₂₋₁₀ alkynyl group which may have a substituent, more preferably a C₁₋₁₀ alkyl group which may have a substituent or a C₂₋₁₀ alkenyl group which may have a substituent, still more preferably a C₁₋₁₀ alkyl group which may have a substituent, and even more preferably an unsubstituted C₁₋₁₀ alkyl group. Examples of the substituent include a halogen atom (a fluorine atom, a chlorine atom, a bromine atom, or an iodine atom), a hydroxy group, and a phenyl group which may have a substituent.

These R² and R³ groups may be linked to each other to form a ring. This ring is preferably a 3- to 8-membered aliphatic cyclic hydrocarbon group, and more preferably a 3- to 6-membered aliphatic cyclic hydrocarbon group. Specific examples of the ring formed by linking R² and R³ groups include cyclopropane, cyclobutane, cyclopentane, cyclohexane, cycloheptane, cyclooctane, cyclopropene, cyclobutene, cyclopropene, cyclohexene, cycloheptene, and cyclooctene.

When R² and R³ are aryl groups which may have a substituent, the aryl group is preferably a phenyl group which may have a substituent, and more preferably an unsubstituted phenyl group.

Examples of the compound represented by the general formula (3) include [1.1.1]propellane (CAS No.: 35634-10-7), 2-methyltricyclo[1.1.1.0]pentane (CAS No.: 1398116-41-0), 2-chlorotricyclo[1.1.1.0]pentane (CAS No.: 120158-94-3), 2-fluorotricyclo[1.1.1.0]pentane (CAS No.: 120158-93-2), 2-ethyltricyclo[1.1.1.0]pentane (CAS No.: 185320-63-2), 2-propyltricyclo[1.1.1.0]pentane (CAS No.: 185320-64-3), tricyclo[1.1.1.0]pentanemethanol (CAS No.: 171856-83-0), spiro[cyclopropane-1,2'-tricyclo[1.1.1.0]pentane] (CAS No.: 208392-00-1), 2-(1-methylpropyl)tricyclo[1.1.1.0]pentane (CAS No.: 185320-72-3), 2-(2-methylpropyl)tricyclo[1.1.1.0]pentane (CAS No.: 185320-65-4), 2-(2,2-difluoro)tricyclo[1.1.1.0]pentane (CAS No.: 210572-24-0), 2-(2,2-dichloro)tricyclo[1.1. 1.0]pentane (CAS No.: 143104-79-4), 2-(2,2-diethyl)tricyclo[1.1.1.0]pentane (CAS No.: 185320-71-2), spiro[cyclobutane-1,2'-tricyclo[1.1.1.0]pentane] (CAS No.: 185320-70-1), 2-(1-propenyl)tricyclo[1.1.1.0]pentane (CAS No.: 189825-10-3), spiro[cyclopentane-1,2'-tricyclo[1.1.1.0]pentane] (CAS No.: 189825-08-9), spiro[2-cyclopropene-1,2'-tricyclo[1.1.1.0]pentane] (CAS No.: 208392-01-2), 2-pentyltricyclo[1.1.1.0]pentane (CAS No.: 119298-85-0), 2-phenyltricyclo[1.1.1.0]pentane (CAS No.: 189825-04-5), 2-(2-methylbutyl)tricyclo[1.1.1.0]pentane (CAS No.: 185320-66-5), 2-heptyltricyclo[1.1.1.0]pentane (CAS No.: 131042-19-8), spiro[cyclohexane-1,2'-tricyclo[1.1.1.0]pentane (CAS No.: 190127-80-1), 2-(2-methylpentyl)tricyclo[1.1.1.0]pentane (CAS No.: 185320-67-6), 2-(2,2-bis(1-methylethyl))tricyclo[1.1.1.0]pentane (CAS No.: 189825-07-8), 2-(3,3-dimethyl-1-butynyl)tricyclo[1.1.1.0]pentane (CAS No.: 189825-13-6), 2-phenylmethyltricyclo[1.1.1.0]pentane (CAS No.: 185320-68-7), 2-(3-methoxypropyl)tricyclo[1.1.1.0]pentane (CAS No.: 137168-28-6), 2-(3-methoxypropyl)tricyclo[1.1.1.0]pentane (CAS No.: 131042-21-2), 2-undecyltricyclo[1.1.1.0]pentane (CAS No.: 131042-20-1), spiro[2-cyclopropene-1,2'-tricyclo[1.1.1.0]pentane (CAS No.: 208392-08-9), 2-(2-methyl-2-phenyl)tricyclo[1.1.1.0]pentane (CAS No.: 189825-06-7), spiro[2-cyclohexene-1,2'-tricyclo[1.1.1.0]pentane] (CAS No.: 189825-12-5), 2-(5-methoxypentyl)tricyclo[1.1.1.0]pentane (CAS No.: 131042-22-3), 2-(2-methyl-2-(2-methyl-1-propenyl)tricyclo[1.1.1.0]pentane (CAS No.: 189825-11-4), 2-(2-phenylethyl)tricyclo[1.1.1.0]pentane (CAS No.: 185320-69-8), 2-[(methoxymethoxy)methyl]tricyclo[1.1.1.0]pentane (CAS No.: 171856-79-4), 2-[(methoxymethoxy)ethyl]tricyclo[1.1.1.0]pentane (CAS No.: 150622-55-2), 2-(hexamethyl)tricyclo[1.1.1.0]pentane (CAS No.: 189825-06-7), 2-(4-methoxyphenyl)tricyclo[1.1.1.0]pentane (CAS No.: 189825-05-6), tricyclo[1.1.1.0]pentane methanol acetate (CAS No.: 171856-81-8), 2-[(4-methoxyphenyl)methyl]tricyclo[1.1.1.0]pentane (CAS No.: 2411144-19-7), 2,2,3,3-tetramethyl-spiro[cyclobutane-1,2'-tricyclo[1.1.1.0]pentane] (CAS No.: 189825-09-0), hexafluoro-tricyclo[1.1.1.0]pentane (CAS No.: 105153-37-5), (1,1-dimethylethyl)dimethyl(tricyclo[1.1.1.0]pentylmethoxy)silane (CAS No.: 171856-80-7), 2,4,5,5-tetrafluoro-tricyclo[1.1.1.0]pentane-2,4-dicarbonyl difluoride (CAS No.: 172897-80-2), (phenylmethyl)tricyclo[1.1.1.0]pentyl methyl carbamate (CAS No.: 171856-82-9), 2,4,5,5-tetrafluoro-tricyclo[1.1.1.0]pentane-2,4-dicarboxylic acid, bis(trifluoromethyl) ester (CAS No.: 172897-78-8), dispiro[2-cyclopropene-1,2'-tricyclo[1.1.1.0]pentane-4',1"-[2]cyclopropene] (CAS No.: 208392-04-5), dispiro[2-cyclopropane-1,2'-tricyclo[1.1.1.0]pentane-4',1"-[2]cyclopropene] (CAS No.: 208392-03-4), dispiro[cyclopropane-1,2'-tricyclo[1.1.1.0]pentane-4',1"-cyclopropane] (CAS No.: 208392-02-3), and tricyclo[1.1.1.0]pentane-2,4-dicarboxylic acid dimethyl ester (CAS No.: 172897-79-9).

In the general formula (1), x and y indicate a proportion of each monomer contained. x represents a content (mol%) of polymerization units derived from the fluoroalkene compound represented by the general formula (2) with respect to all units contained in the polymer. y represents a content (mol%) of polymerization units derived from the propellane compound represented by the general formula (3) with respect to all units contained in the polymer. x + y = 100(%), and x and y are in ranges of 10 ≤ x, y ≤ 90, respectively. x is preferably 20 or more, more preferably 30 or more, and still more preferably from 40 to 60.

The fluoroalkene copolymer according to the present invention may contain other polymerization units in addition to the polymerization unit derived from the fluoroalkene compound represented by the general formula (2) and the polymerization unit derived from the propellane compound represented by the general formula (3). In the fluoroalkene copolymer according to the present invention, a total content (mol%) of the polymerization units derived from the fluoroalkene compound represented by the general formula (2) and the polymerization units derived from the propellane compound represented by general formula (3) with respect to all units contained in the polymer is preferably 1 mol% or more, more preferably 10 mol% or more, still more preferably 25 mol% or more, and even more preferably 50 mol% or more.

The fluoroalkene copolymer having the structure represented by the general formula (1) is produced by radically polymerizing the fluoroalkene compound represented by the general formula (2) and the propellane compound represented by the general formula (3). When this fluoroalkene copolymer contains other polymers, monomers of these other polymerization units are blended as raw materials.

The radical polymerization for synthesizing the fluoroalkene copolymer according to the present invention is carried out by irradiating a solvent in which monomer compounds as raw materials are dissolved with ultraviolet rays, with the addition of a photopolymerization initiator as necessary. Alternatively, the monomer compounds themselves may be used as the solvent, and polymerization may be carried out without the use of a solvent (bulk polymerization). The wavelength of the ultraviolet rays may be from 200 to 400 nm, and preferably from 300 to 350 nm. The polymerization temperature during the radical polymerization is appropriately determined by taking into consideration the types of monomers used, and the like, but from the viewpoints of the stability of the propellane compound represented by the general formula (3) and better reaction efficiency, it is preferably 0°C or lower, and more preferably -30°C or lower.

The solvent used in radical polymerization may be various solvents that can dissolve the monomer compounds used as raw materials and are inert to the reaction, and can be appropriately selected for use from known solvents used in chemical reactions. Examples of such solvents include hydrocarbon-based solvents, ethers, esters, ketones, nitriles, amides, and halogenated hydrocarbon compounds. Examples of the hydrocarbon-based solvents include pentane, hexane, heptane, benzene, toluene, and xylene. Examples of the ethers include diethyl ether, dibutyl ether, t-butyl methyl ether (MTBE), cyclopentyl methyl ether (CPME), dimethoxyethane (DME), and diethylene glycol dimethyl ether (Diglyme). Examples of the ketones include acetone, methyl ethyl ketone (MEK), and methyl isobutyl ketone (MIBK). Examples of the nitriles include acetonitrile, propionitrile, adiponitrile, and benzonitrile. Examples of the amides include N,N-dimethylformamide (DMF), N,N-dimethylacetamide (DMAC), and N-methylpyrrolidone (NMP). Further, fluorine-containing solvents such as hexafluorobenzene, CFE-419 (ClCF₂CFClCF₂OCF₂CF₂Cl), and HFC-365mfc (CAS No.: 406-58-6) may also be used. The solvent may be one type of solvent or a mixture of two or more types of solvents. The hydrocarbon-based solvents and ethers are more preferably used as the polymerization solvents.

The photopolymerization initiator used in synthesizing the fluoroalkene copolymer according to the present invention can be appropriately selected for use from known photopolymerization initiators used in radical polymerization. In synthesizing the fluoroalkene copolymer according to the present invention, for example, alkylphenone-based photopolymerization initiators, acylphosphine oxide-based photopolymerization initiators, oxime ester-based photopolymerization agents, and the like can be used, and it is preferable to use an alkylphenone-based photopolymerization initiator. Among them, alkylphenone-based photopolymerization initiators having an absorption at a wavelength of 230 to 350 nm are particularly suitable. Examples of the alkylphenone-based photopolymerization initiator include 2-hydroxy-2-methyl-1-phenyl-1-propanone (CAS No.: 7473-98-5) (DC(Irgacure)-1173), 2,2-dimethoxy-2-phenylacetophenone (CAS No.: 24650-42-8) (Irgacure-651), 1-hydroxycyclohexyl-phenyl ketone (CAS No.: 947-19-3) (Irgacure-184), 1-[4-(2-hydroxyethoxy)phenyl]-2-hydroxymethylpropanone (CAS No.: 106797-53-9) (Irgacure-2959), 2-hydroxy-1-(4-(4-(2-hydroxy-2-methylpropionyl)benzyl)phenyl)-2-methylpropan-1-one (CAS No.: 474510-57-1) (Irgacure-127), 2-methyl-1-[4-(methylthio)phenyl]-2-morpholinopropan-1-one (CAS No.: 71868-10-5) (Irgacure-907), 2-benzyl-2-(dimethylamino)-4'-morpholinobutyrophenone (CAS No.: 119313-12-1) (Irgacure-369), and 2-dimethylamino-2-(4-methylbenzyl)-1-(4-morpholin-4-yl-phenyl)-butan-1-one (CAS No.: 119344-86-4) (Irgacure-379EG).

The fluoroalkene copolymer according to the present invention is a fluorine-containing polymer having a cyclic structure alternating with a fluoroalkene monomer in the main chain. In general, it has been known that fluorine-containing polymers having a cyclic structure are amorphous because molecular chains are difficult to align, and exhibit high transparency while retaining the chemical resistance, light resistance, and water resistance that are characteristics of fluorine-containing polymers. In fact, the fluoroalkene copolymer according to the present invention can also be formed into a transparent thin film, and by becoming an alternating copolymer of propellane and fluoroalkene, the characteristics of the fluorine-containing polymer are retained, and, for example, it is expected to be applied to optical materials with high chemical resistance, light resistance, and water resistance.

### Examples

Hereinafter, the present invention will be described with reference to Examples, but the present invention is not limited to these Examples.

It should be noted that unless otherwise specified, the unit of yield (%) described in the Examples is mol%.

### <Analytical Equipment>

Among the NMRs used in the analyses of the Examples and the like, "JNM-ECA500 (500 MHz)" manufactured by JEOL Ltd. was used for the solid-state NMR (¹³C NMR).

Combustion ion chromatography was performed using an analytical system including a combustion ion chromatography analyzer (manufactured by Yanaco LID Co., Ltd.) composed of a sample introduction device (THA-24), a combustion furnace (SQ-10), an absorption unit (HSU-35), and an ion chromatograph (ic-2010).

Among the NMRs used in the analyses of the Examples and the like, ¹⁹F NMR and ¹H NMR were measured using "JNM-ECS400 (400 MHz)" manufactured by JEOL Ltd. 0 PPM was used as the reference value for tetramethylsilane in ¹H NMR, and -162 PPM was used as the reference value for C₆F₆ in ¹⁹F NMR.

"EXSTAR6000" manufactured by Seiko Instruments Inc. was used as a simultaneous thermogravimetric-differential thermal analyzer (TG-DTA).
"DSC7020," manufactured by Seiko Instruments Inc. was used as a high-sensitivity differential scanning calorimeter (DSC).
Gel permeation chromatography (GPC) was performed using "Viscoteck TDA 305" manufactured by Malvern Panalytical Ltd.
Contact angles were measured using a contact angle meter "DMs-401" manufactured by Kyowa Interface Science Co., Ltd.

### [Production Example 1]

The propellane used in the following experiments was synthesized according to the method described in Non Patent Document 4.

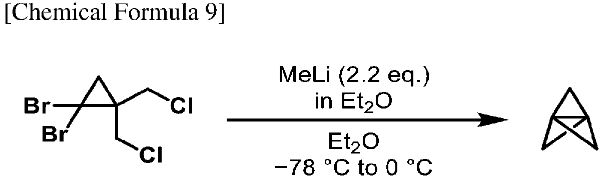

The synthesized propellane was purified by low-temperature vacuum distillation to obtain a solution in a diethyl ether/pentane mixed solvent. The boiling point of propellane was 70°C. The concentration of the propellane solution was determined by adding hexafluoroparaxylene as an internal standard and quantifying the propellane by ¹H NMR measurement. It was used in the state of diethyl ether/pentane mixed solvent for polymerization.

### [Production Example 2]

The MOM-propellane used in the following experiments was synthesized according to the method described in Non Patent Document 6.

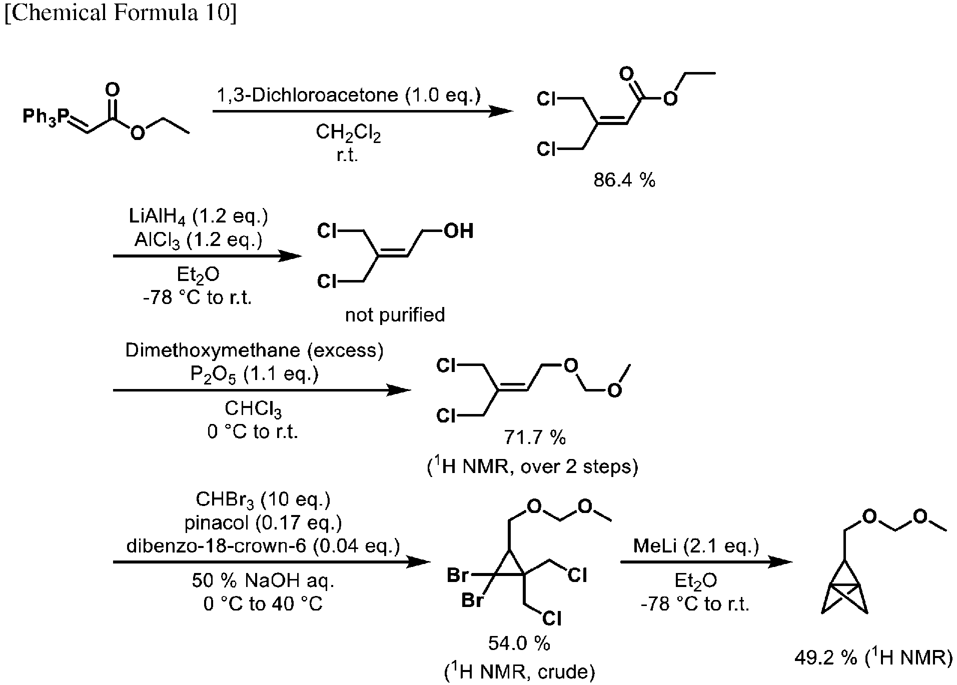

### [Comparative Example 1]

A polymer 1 was synthesized by homopolymerization of propellane.

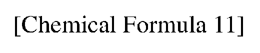

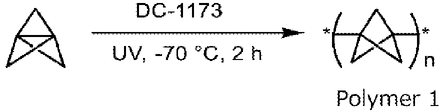

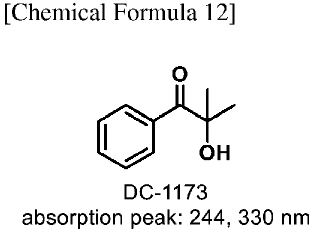

A stirring bar was placed in a 30 mL volume Schlenk flask, a septum was attached, and nitrogen substitution was performed three times. 5 mL of the diethyl ether/pentane solution (0.17 M) of propellane synthesized in Production Example 1 and 0.1 equivalents of DC-1173 as a photoinitiator were then added using a syringe, and copolymerization was carried out by irradiating ultraviolet rays (xenon lamp: 300 W, wavelength: 250-500 nm) at -70°C for 2 hours. After that, the reaction solution was reprecipitated with methanol, the supernatant was removed by decantation, followed by evaporation and vacuum drying to obtain the polymer 1 (81 mg) as a white solid insoluble in the solvent.

Solid ¹³C NMR (125 MHz): δ = 38.2, 48.8ppm
IR: 3050-2850 (C-H stretch)

### [Example 1]

A copolymer 1 of propellane and tetrafluoroethylene (TFE) was synthesized.

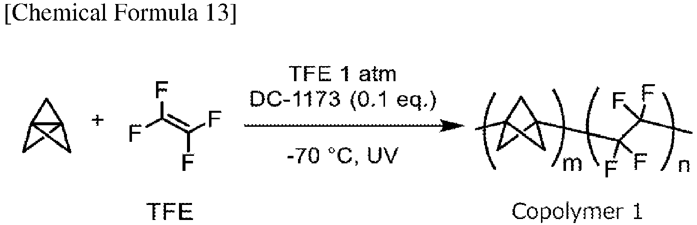

A stirring bar was placed in a 30 mL volume Schlenk flask, a septum was attached, and nitrogen substitution was performed three times. Then, the diethyl ether/pentane solution of propellane synthesized in Production Example 1 (0.82M, 1.2 mL) and DC-1173 (15.2 µL, 0.1 equivalents) as a photoinitiator were respectively added to the Schlenk flask using a syringe. This reaction system was frozen and degassed with liquid nitrogen, heated to -70°C under a TFE atmosphere at normal pressure, and copolymerization was carried out by irradiating ultraviolet rays for 3 hours and 30 minutes. The reaction was then stopped by circulating nitrogen at -70°C to drive TFE out of the system. Methanol was added to this reaction solution to precipitate the polymer, and the copolymer was isolated by Kiriyama filtration. The obtained solid was dried at 40°C for 1 hour or more using a vacuum dryer to obtain the copolymer 1 (79 mg) as a white solid that is poorly soluble in organic solvents. The fluorine atom content was quantified by combustion ion chromatography, and the TFE content was calculated to be 41.9 mol%.

Solid ¹³C NMR (125 MHz): δ = 19.1, 31.7, 37.2, 38.2, 48.8, 115.2 ppm
IR: 3050-2850 (C-H stretch), 1250-1000 (C-F stretch) cm⁻¹

### [Example 2]

A copolymer 2 of MOM-propellane and tetrafluoroethylene (TFE) was synthesized.

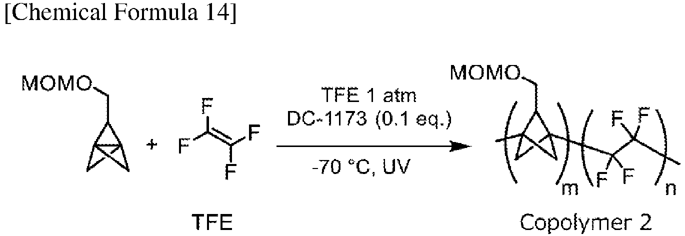

DC-1173 (6.7 µL, 0.1 equivalents) was added to a pentane solution of MOM-propellane (0.82M, 0.54 mL) synthesized in Production Example 2, and the resulting mixture was frozen and degassed using liquid nitrogen. Then, TFE was blown into this reaction solution at normal pressure, the temperature was raised to -70°C, and ultraviolet rays were irradiated. After 1 hour and 30 minutes, a portion of the reaction solution solidified. After another 30 minutes, nitrogen was circulated to drive out TFE, thereby obtaining a yellow solid. After confirming that it dissolved in CDCl₃, an excess amount of methanol was added thereto to form a white precipitate. The white solid was taken out by centrifugal separation (2,000 rpm, 15 minutes) and vacuum dried to obtain the copolymer 2 (41.5 mg). The fluorine atom content was quantified by combustion ion chromatography, and the TFE content was calculated to be 39.8 mol%. The obtained copolymer 2 was soluble in organic solvents such as chloroform, diethyl ether, and tetrahydrofuran.

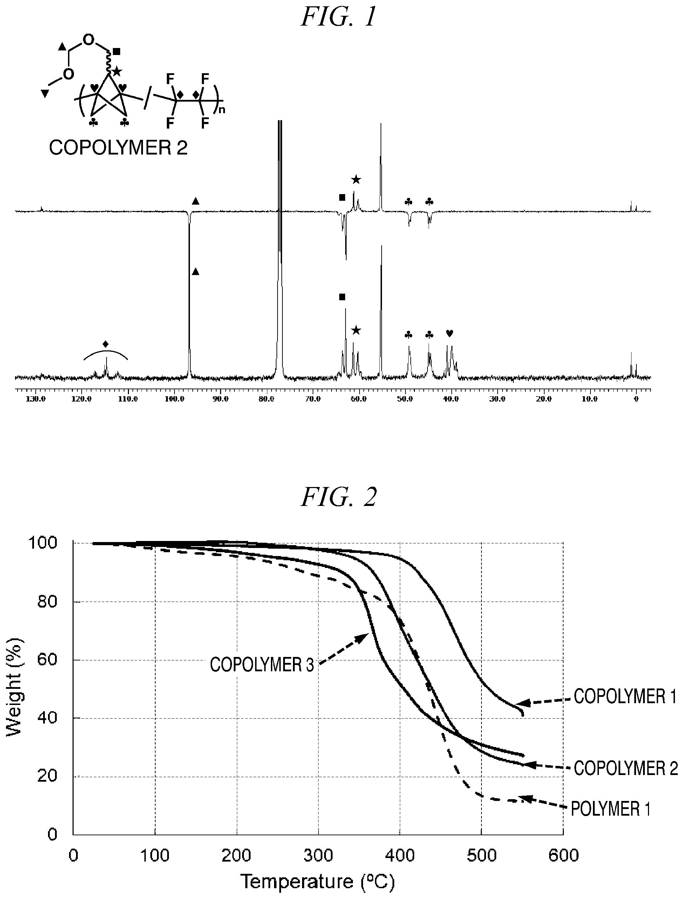

FIG. 1 shows the ¹³C NMR (100 MHz, CDCl₃) spectrum data of the obtained copolymer 2. In the figure, the upper part shows DEPT135 and the lower part shows the ¹³C NMR spectrum data.

Further, when the molecular weight was measured for the copolymer 2 by GPC using THF as an eluent, the molecular weight Mn was 2.2 × 10⁴ (polystyrene standard) and the molecular weight distribution Mw/Mn was 2.2.

¹⁹F NMR (376 MHz, CDCL₃): -113.5 to -114.7 ppm (m)

### [Test Example 1]

Thermogravimetric measurements were conducted for the polymers synthesized in Comparative Example 1, Example 1, and Example 2. The measurement results are shown in FIG. 2.

As shown in FIG. 2, the 5% weight loss temperatures of the polymer 1, copolymer 1, and copolymer 2 were 214°C, 396°C, and 344°C, respectively. From these results, it was found that the heat resistance of the obtained copolymers 1 and 2 was superior to that of the polymer 1, which was a propellane homopolymer.

### [Example 3]

A copolymer 3 of propellane and perfluoropropyl vinyl ether (PPVE) was synthesized.

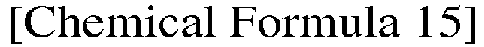

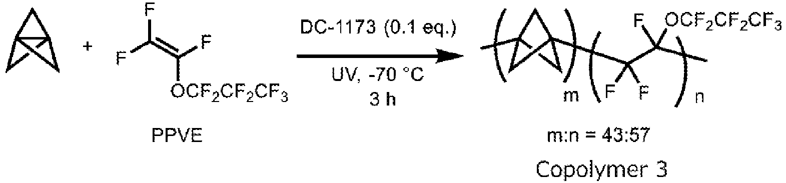

### (1) Synthesis of polymer for molecular weight measurement

A stirring bar was placed in a 30 mL volume Schlenk flask, a septum was attached, and nitrogen substitution was performed three times. Then, the diethyl ether/pentane solution of propellane synthesized in Production Example 1 (4 mL, 0.69 mmol), PPVE (0.69 mmol), and DC-1173 (0.1 equivalents) as a photoinitiator were respectively added to the Schlenk flask using a syringe, and copolymerization was performed by irradiating ultraviolet rays at -70°C for 3 hours. After that, post-treatment of the reaction was carried out by evaporation and evacuation. Methanol was added thereto to perform reprecipitation, and the supernatant was removed by decantation, followed by drying by evaporation and vacuum drying to obtain the copolymer 3 (152 mg) as a white solid. The obtained copolymer 3 was soluble in organic solvents such as chloroform, diethyl ether, cyclopentyl methyl ether, and hexafluorobenzene.

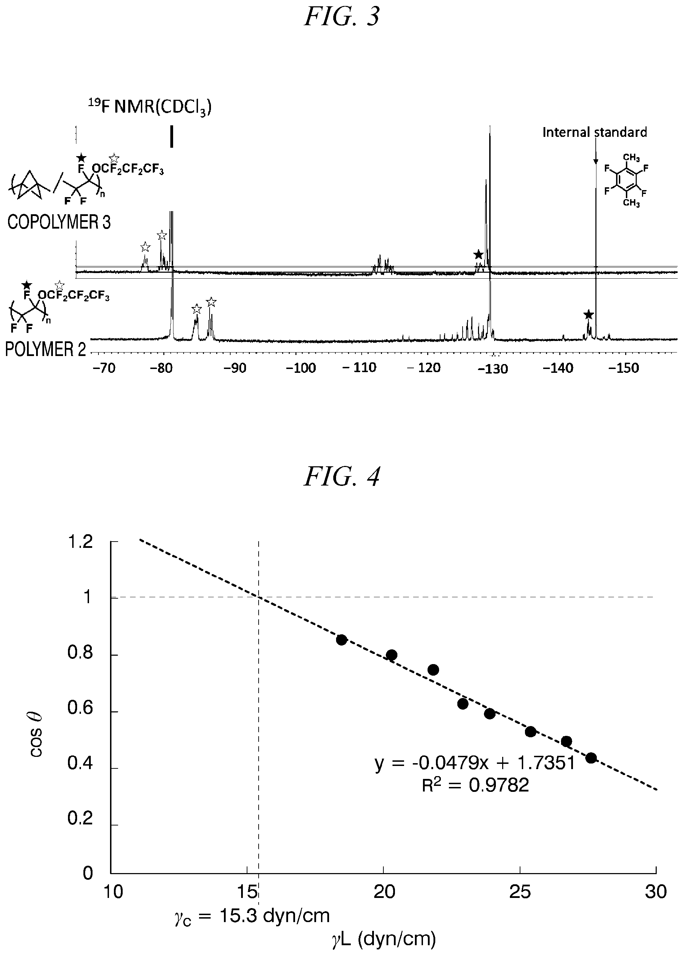

The content ratio of the polymerization units derived from each monomer was determined to be m: n = 43: 57 by dissolving the purified polymer in deuterated chloroform, adding hexafluoroparaxylene as an internal standard, and determining the integral ratio of the internal standard and copolymer in ¹H NMR and ¹⁹F NMR. Further, the number average molecular weight of the obtained copolymer 3 was confirmed to be 17,150 based on the area ratio of the terminal group and main chain peaks in ¹H NMR. The ¹⁹F NMR spectrum data of the copolymer 3 is shown in FIG. 3.

¹H NMR (400 MHz, CDCl₃/hexafluorobenzene = 1/1 mixed solvent): δ = -1.80 to -2.02 (m, 4H), -2.24 to -2.38 (m, 2H) ppm
¹⁹F NMR (376 MHz, CDCl₃/hexafluorobenzene = 1/1 mixed solvent): δ = -78.0 to -79.0 (m, 2F), -83.6 (m, 3F), -114.0 to -117.2 (2F), -129.0 to -131.6 (m, 3F) ppm IR: 3050-2850 (C-H stretch), 1220 (C-O stretch), 1200-950 (C-F stretch) cm⁻¹

### (2) Synthesis and purification of polymer for thermal analysis and contact angle measurement

A diethyl ether/pentane solution of propellane (11 mL, 3.4 mmol) and PPVE were photocopolymerized in the same manner as in Example 3, in "millimoles". Methanol was then added to the reaction solution, and the polymer and the solution were separated using a centrifuge. The crude product obtained by removing the solvent from this gel-like polymer by distillation, followed by vacuum drying, was dissolved in hexafluorobenzene, reprecipitated again with methanol, and dried by evaporation and vacuum drying. This operation was repeated once more to obtain the copolymer 3 (405 mg) as a white solid.

Thermogravimetric measurement was conducted for the obtained copolymer 3. The results are shown by overlaying on FIG. 2 in Test Example 1. The 5% weight loss temperature of the copolymer 3 was 255°C. Further, the glass transition point (Tg) of the copolymer 3 measured by DSC was 177.5°C.

The obtained copolymer 3 was dissolved in hexafluorobenzene at a concentration of 1.8% by weight and formed into a film on a glass substrate by a drop-cast method. The obtained film was a transparent thin film. The contact angles of water and hydrocarbon solvents were measured on the surface of this thin film. At the same time, for comparison, the contact angles of water and hydrocarbon solvents were also measured for two kinds of 100 µm-thick fluororesin films (PFA film (3-5591-04) and ETFE film (3-5590-02), both of which were obtained from As One Corporation) in the same manner. The contact angle of water was 118° for the copolymer 3, 114° for PFA, and 101° for ETFE, and the copolymer 3 had the highest water repellency. Further, the contact angles of various hydrocarbon solvents for the copolymer 3, PFA, and ETFE were as shown in Table 1. For the resin film of copolymer 3, the cosine (cos) of the measured values of the contact angles of various solvents (Table 1) was plotted against the surface tension values (yL) of various hydrocarbon solvents described in Non Patent Document 14 as shown in FIG. 4 to determine the critical surface tension (yc: yL extrapolated to cosθ = 1). In the plot of FIG. 4, the yL value at the intersection of the approximate straight line and cosθ = 1 is the critical surface tension (yc) value. The critical surface tension values were also determined in the same manner for the PFA resin film and the ETFE resin film. As a result, the critical surface tension values were 15.3 dyn/cm for the copolymer 3, 17.1 dyn/cm for PFA, and 19.3 dyn/cm for ETFE, and the copolymer 3 had the lowest surface energy. This was lower than the value of polytetrafluoroethylene (18.5 dyn/cm) described in Non Patent Document 14, indicating that the copolymer 3 was a resin with low surface energy even when compared to general fluororesins. This characteristic of low surface energy is a characteristic not found in the copolymers of Non Patent Documents 11 to 13, and can be said to be a characteristic that is developed by introducing a fluoroalkene.

**[Table 1]**

| Contact angles of various hydrocarbon solvents (unit: deg[°]) | | | | | | | | |
|---|---|---|---|---|---|---|---|---|
| Solvent | C6H14 | C7H16 | C8H18 | C9H20 | C10H22 | C12H24 | C14H28 | C16H34 |
| Copolymer 3 | 33.0 | 38.6 | 43.1 | 52.6 | 54.9 | 59.3 | 61.9 | 65.5 |
| PFA | 21.0 | 28.3 | 33.7 | 37.6 | 42.7 | 46.2 | 51.1 | 54.1 |
| ETFE | 12.8 | 13.1 | 17.8 | 21.4 | 25.9 | 30.8 | 41.2 | 44.4 |

### (3) Synthesis and purification of polymer for vapor pressure measurement and XPS measurement

A diethyl ether/pentane solution of propellane (9 mL, 3.9 mmol) and PPVE were photocopolymerized in the same manner as in Example 3. Methanol was then added to the reaction solution, and the polymer and the solution were separated using a centrifuge. The crude product obtained by removing the solvent from this gel-like polymer by distillation, followed by vacuum drying, was dissolved in hexafluorobenzene, reprecipitated again in methanol, and dried by evaporation and vacuum drying. This operation was repeated once more to obtain the copolymer 3 (561 mg) as a white solid.

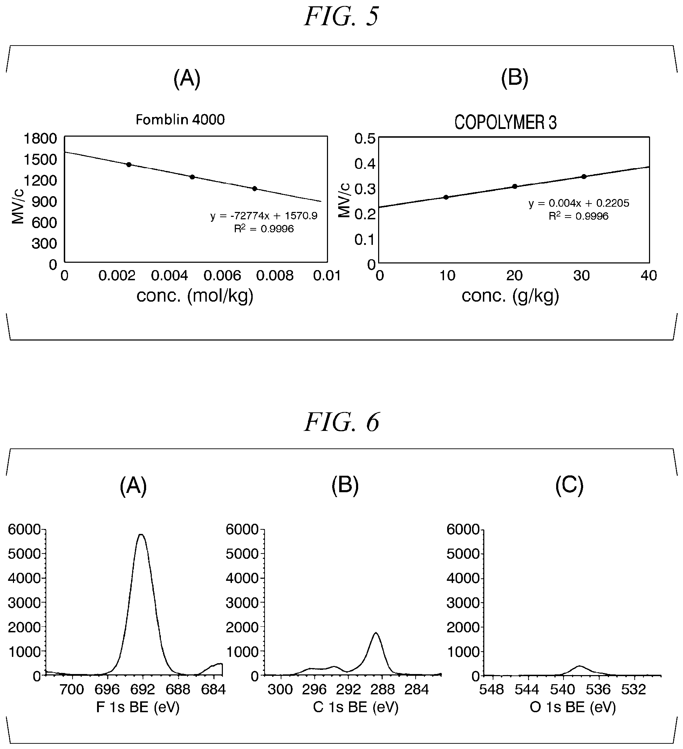

The obtained copolymer 3 was dissolved in hexafluorobenzene at a concentration of 1.0, 2.0, or 3.0% by mass (10, 20, or 30 g/kg), and the vapor pressure measurement was conducted. The vapor pressure was measured using a vapor pressure measuring device (product name: "Vapor Pressure Osmometer K-7000", manufactured by KNAUER Wissenschaftliche Geräte GmbH). A perfluoropolyether derivative with a molecular weight of 4090 ("Fomblin (registered trademark) 4000", manufactured by Solvay S.A.) was used as a calibration sample. For Fomblin 4000 and the copolymer 3, the measurement samples adjusted to each concentration ("mol/kg" for the measurement of Fomblin 4000, and "g/kg" for the measurement of the copolymer 3) were respectively subjected to measurement using the vapor pressure measuring device to obtain the measured value (MV). FIG. 5(A) shows a diagram in which the measurement data are plotted with the horizontal axis representing each concentration (c) (mol/kg) of Fomblin 4000 and the vertical axis representing a value (MV/c value) obtained by dividing the measured value (MV) at each concentration (c) by the concentration. FIG. 5(B) shows a diagram in which the measurement data are plotted with the horizontal axis representing each concentration (c) (g/kg) of the copolymer 3 and the vertical axis representing a value (MV/c value) obtained by dividing the measured value (MV) at each concentration (c) by the concentration. As shown in FIGS. 5(A) and (B), each plot was linear. The intercept value (K_{calib}) of this straight line in Fomblin 4000 was 1571 (FIG. 5(A)). The intercept value (Kₘₑₐₛ) of this straight line in the copolymer 3 was 0.220 (FIG. 5(B)). The molecular weight of the copolymer 3 was calculated from the formula: K_{calib}/Kₘₑₐₛ. As a result, it was found that the number average molecular weight of the copolymer 3 was about 7100.

The obtained copolymer 3 was dissolved in hexafluorobenzene at 2.0% by mass and formed into a film on an ETFE film by a drop-cast method. The produced thin film of the copolymer 3 was subjected to X-ray photoelectron spectroscopy (XPS) measurement. The results are shown in FIG. 6. The XPS spectrum of fluorine in the thin film of copolymer 3 is shown in FIG. 6(A), the XPS spectrum of carbon therein is shown in FIG. 6(B), and the XPS spectrum of oxygen therein is shown in FIG. 6(C), respectively. From the peak area ratio of each element, the fluorine content was 51.6 atomic percent, the carbon content was 44.1 atomic percent, and the oxygen content was 4.3 atomic percent on the film surface. From these results, it was found that the abundance ratio of contents of the propellane unit and the fluoroalkene unit on the film surface was propellane: fluoroalkene = 58: 42 (molar ratio).

### [Comparative Example 2]

A polymer 2 was synthesized by homopolymerization of PPVE.

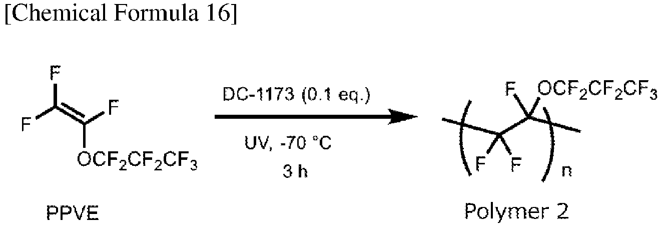

Polymerization and purification were carried out in the same manner as in Example 3 (1) using PPVE (0.26 mL, 1.5 mmol) and DC-1173 (0.1 equivalents) as a photoinitiator to obtain a PPVE homopolymer 2 (164 mg) as a yellow solid. The number average molecular weight of the obtained polymer 2 was confirmed to be 1686 based on the area ratio of the terminal group and main chain peaks in ¹H NMR and ¹⁹F NMR. The ¹⁹F NMR spectrum data of the polymer 2 is shown in FIG. 3.

¹⁹F NMR (376 MHz, CDCl₃): δ = -81.0 (m, 3F), -84.0 to -88.0 (m, 2F), -123.0 to -130.0 (m, 4F), -143.0 to -146.0 (m, 1F) ppm
IR: 1350-1200 (C-O stretch), 1200-950 (C-F stretch) cm⁻¹

As shown in FIG. 3, in ¹⁹F NMR of the copolymer 3 in Example 3, the peak at - 84.0 to -88.0 ppm corresponding to OCF₂ next to the ether oxygen of the homopolymer 2 of PPVE in Comparative Example 2 and the peak at -143.0 to -146.0 ppm corresponding to OCF shifted to -78.0 to -79.0 ppm and -127.0 to -129.0 ppm due to copolymerization with propellane, and no peaks were observed in the -84.0 to -88.0 ppm and -143.0 to - 146.0 ppm regions, suggesting that there are almost no PPVE chains in the polymerization chains of the copolymer 3. From this result, it can be said that the alternation of propellane and PPVE in the copolymer 3 is high.

### [Example 4]

A copolymer 4 was synthesized from propellane and 2-(heptafluoropropoxy)hexafluoropropyl trifluorovinyl ether (PHVE).

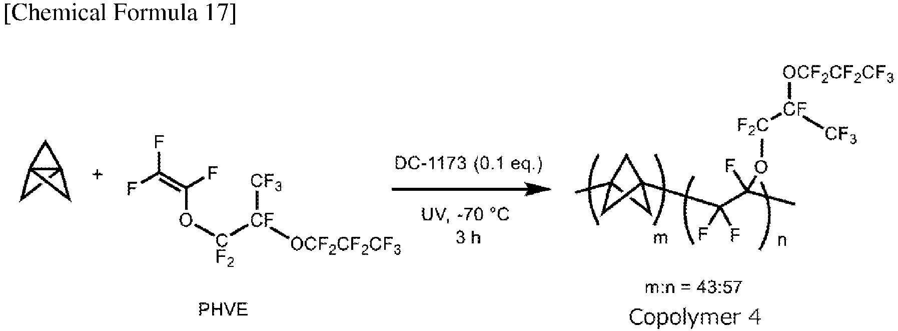

Polymerization and purification were carried out in the same manner as in Example 3 (1) using a diethyl ether/pentane solution of propellane (5.0 mL, 1.47 mmol), PHVE (1.47 mmol), and DC-1173 (0.1 equivalents) as a photoinitiator to obtain the copolymer 4 (441 mg) as a white solid. The number average molecular weight of the obtained copolymer 4 was confirmed to be 32,310 based on the area ratio of the terminal group and main chain peaks in ¹H NMR.

¹H NMR (400 MHz, CDCl₃/hexafluorobenzene = 1/1 mixed solvent): δ = 2.4-2.2 (m, 2H), 2.0-1.8 (m, 4H) ppm
¹⁹F NMR (376 MHz, CDCl₃/hexafluorobenzene = 1/1 mixed solvent): δ = -75.0 to -77.0, -79.0 to -81.0 (m, 2F), -80.5 to -83.5 (m, 8F), -114.0 to -117.5 (m, 2F), -130.0 to -131.7 (m, 3F), -144.4 (brd, 1F)
IR: 3050-2850 (C-H stretch), 1230 (C-O stretch), 1200-900 (C-F stretch) cm⁻¹

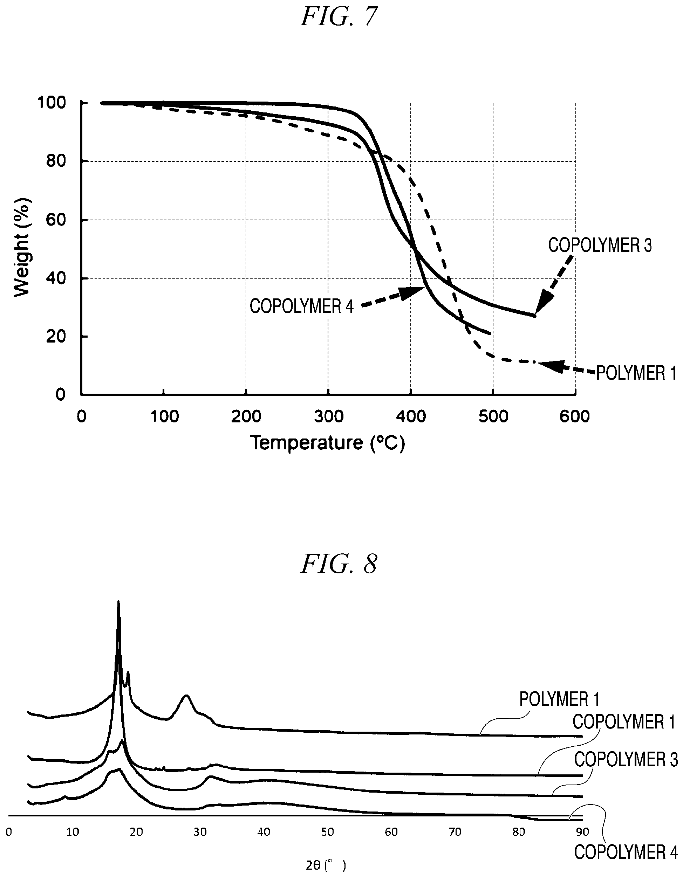

Thermogravimetric measurement was conducted for the obtained copolymer 4. The results are shown in FIG. 7 by overlaying on the measurement results of the copolymer 3. The 5% weight loss temperature of the copolymer 4 was 338°C.

The obtained polymer 1, copolymer 1, copolymer 3, and copolymer 4 were subjected to powder X-ray measurement. The results are shown in FIG. 8. In the cases of copolymers 3 and 4, the low-angle peaks were broad, and it was presumed that the use of fluoroalkenes with long side chains reduced the crystallinity.

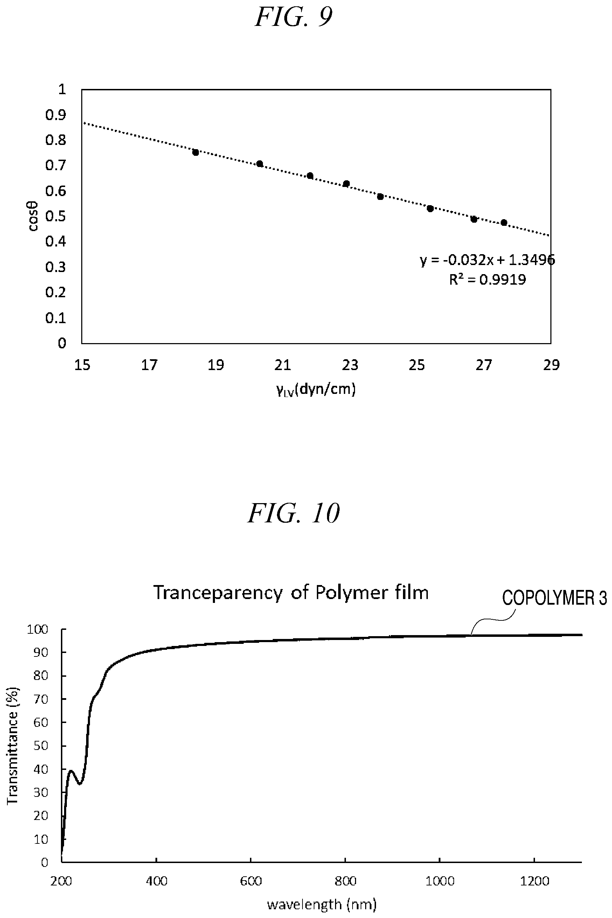

Contact angle measurement was conducted for the obtained copolymer 4. It was dissolved in hexafluorobenzene at a concentration of 3.0% by mass and formed into a film on a glass substrate by a drop-cast method. The contact angles of water and hydrocarbon solvents were measured on the produced thin film surface. The measurement results are shown in FIG. 9. The contact angle of water in the thin film of the copolymer 4 was 116°, and the contact angle of n-hexadecane was 61.6°. The critical surface tension of this thin film was calculated in the same manner as in Example 3 and was found to be 10.9 dyn/cm, indicating even higher water and oil repellency than that of the thin film of the copolymer 3.

UV-VIS measurement was conducted for the obtained copolymer 3. More specifically, the copolymer 3 was dissolved in hexafluorobenzene at a concentration of 3.0% by mass, and formed into a film on a quartz substrate by a drop-cast method. The results are shown in FIG. 10. The copolymer 3 exhibited very high transparency, with a transmittance of 90% or more even in a wavelength range of 370 nm or more.

### [Example 5]

In order to obtain a high molecular weight copolymer 3 of propellane and perfluoropropyl vinyl ether (PPVE), polymerization conditions were examined.

### (1) Examination of solvent

In order to examine the optimal solvent for the synthesis of copolymer 3, propellane was synthesized in various solvents. Propellane was synthesized according to the method described in Non Patent Document 15.

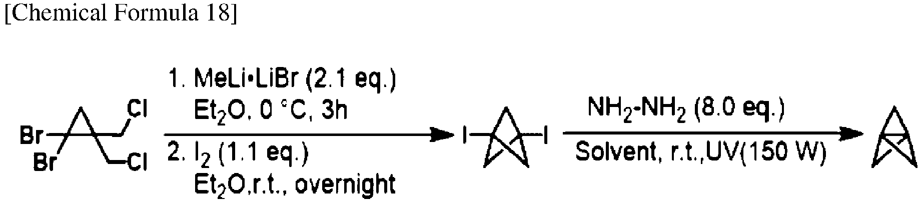

Each propellane solution was obtained by conducting reduction reactions with hydrazine using diethyl ether, hexane, hexafluorobenzene, CFE-419, or HFC-365mfc as a solvent. The propellane solution was filtered through alumina to remove hydrazine, and then purified by crystallization of the unreacted diiodobicyclopentane by recrystallization, followed by filtration under nitrogen. When hexafluorobenzene was used as the solvent, since the melting point of hexafluorobenzene was as high as 5°C, making recrystallization impossible, purification was carried out by distillation by vacuum transfer to a Schlenk flask after alumina filtration. The concentration of the propellane solution was determined by adding hexafluoroparaxylene as an internal standard and quantifying the propellane by ¹H NMR measurement.

Polymerization was carried out in the same manner as in Example 3 by adding 1 equivalent of PPVE and 0.02 equivalent of DC-1173 to each of the obtained propellane solutions. After the reaction, methanol was added to terminate the polymerization, and the solvent was then evaporated in an evaporator for drying. A small amount of hexafluorobenzene was added to the resulting dried product to dissolve the solid, and then reprecipitation was carried out with methanol to purify the polymer. In the system in which hexafluorobenzene was used as the solvent, no polymer precipitated even after the reaction.

The obtained copolymer 3 was dissolved in hexafluorobenzene at a concentration of 0.8, 1.6, or 2.4% by mass (8, 16, or 24 g/kg), and the vapor pressure was measured in the same manner as in Example 3. A perfluoropolyether derivative with a molecular weight of 3850 ("Fomblin (registered trademark) 4000", manufactured by Solvay S.A.) was used as a calibration sample. From the measurement results of the Fomblin 4000 derivative, K_{calib} was calculated to be 1306. The results of the vapor pressure measurement are shown in Table 2.

**[Table 2]**

| Solvent | Kₘₙ | MW |
|---|---|---|
| Diethyl ether | 0.664 | 2000 |
| Hexane | 0.339 | 3800 |
| CFE-419 | 0.382 | 3400 |
| Hexafluorobenzene | 0.165 | 7900 |

As shown in Table 2, when hexafluorobenzene was used as the solvent, Kₘₙ was the smallest, the amount of polymer precipitation after polymerization was the smallest, and the molecular weight of the obtained polymer was also the largest. From these results, it was considered that hexafluorobenzene was the optimal solvent, and hexafluorobenzene was used as the solvent for the subsequent polymerization reactions.

### (2) Examination of polymerization conditions

Polymerization was performed by altering the initiator equivalents. Polymerization and purification were carried out in the same manner as in Example 3 by adding the initiator DC-1173 to the hexafluorobenzene solution of propellane at 0.005 equivalents (Entry 2) or 0.08 equivalents (Entry 3).

Next, the concentration of the propellane solution was examined. The propellane solution synthesized under the conditions in the above section (1) had a concentration of 0.3 M (Entry 1). Propellane was synthesized and purified under the same conditions, with the exception that the amount of solvent in the reduction reaction from diiodobicyclopentane to propellane was halved. As a result, a propellane solution with a concentration of 0.5 M was obtained (Entry 4). Further, after the synthesis and purification of the propellane solution were carried out under the same conditions, a propellane solution with a concentration of 0.15 M was obtained by adding hexafluorobenzene (Entry 5).

When polymerization was performed in the hexafluorobenzene solvent, the PPVE content in the copolymer tended to decrease. For this reason, polymerization was carried out by altering the monomer charge ratio of the polymer. 4 equivalents (Entry 6) or 9 equivalents (Entry 7) of PPVE were added to the propellane solution, and polymerization and purification were carried out in the same manner as in Example 3.

The copolymers 3 synthesized in these manners were dissolved in hexafluorobenzene at a concentration of 0.8, 1.6, or 2.4% by mass (8, 16, or 24 g/kg), and the vapor pressure was measured in the same manner as in Example 3. A perfluoropolyether derivative with a molecular weight of 3850 ("Fomblin (registered trademark) 4000", manufactured by Solvay S.A.) was used as a calibration sample. From the measurement results of the Fomblin 4000 derivative, K_{calib} was calculated to be 1378. The results of the vapor pressure measurement are shown in Table 3.

**[Table 3]**

| Entry | Kₘₙ | MW |
|---|---|---|
| 2 | 0.203 | 6800 |
| 3 | 0.166 | 8300 |
| 4 | 0.285 | 4800 |
| 5 | 0.416 | 3300 |
| 6 | 0.260 | 5300 |
| 7 | 0.169 | 8200 |

As shown in Table 3, no polymer with a significantly higher molecular weight than that in Entry 1 (7900) was obtained under any of the polymerization conditions. In other words, even if the initiator equivalent, monomer concentration, or monomer charge ratio was changed, the molecular weight of the obtained polymer did not improve greatly. Since the melting point of the hexafluorobenzene solution was as high as 5°C, the reaction temperature was set to 5°C when polymerization was performed in the hexafluorobenzene solvent. It is thought that the reactivity of propellane, which has homopolymerizability, increased because the polymerization temperature was higher than when polymerization was carried out in the diethyl ether solvent, resulting in the inclusion of not only alternating sequences of propellane and PPVE but also many continuous sequences of propellane. By using a mixed solution of hexafluorobenzene and diethyl ether as a solvent, no precipitation occurs even after polymerization, and by performing polymerization at a low temperature while suppressing the reactivity of propellane, an improvement in molecular weight and an improvement in the PPVE content can be expected.

### [Example 6]

The film formability by a spin coating method and wettability were evaluated for the copolymers 3 and 4.

The copolymers 3 and 4 were each formed into a film on a silicon wafer using a spin coater. The silicon wafer was previously cut into 1.5 cm squares, then washed by heating in a piranha solution at 100°C for 2 hours, and stored in ultrapure water. Before film formation, this silicon wafer was spin-coated with acetone and hexafluorobenzene in that order to wash away the residual solvent on the substrate. The copolymer 3 or copolymer 4 was then spin-coated on this silicon wafer to form a film. After film formation, the copolymer 3 film and copolymer 4 film were heat-treated at 180°C and at 150°C, respectively, by vacuum drying for 12 hours or more.

Contact angles were measured for these thin films. Water and diiodomethane were used as probe liquids. Further, the measurements were conducted seven or more times, and the average value was calculated from the five points excluding the maximum and minimum values. Furthermore, the surface free energy was calculated using the Owens-Wendt equation based on the contact angle values of water and diiodomethane. These results are shown in Table 4.

**[Table 4]**

| Thin film | θ_{water} (°) | θ_{diiodomethane} (°) | Surface free energy (mJ/m²) |
|---|---|---|---|
| Copolymer 3 | 115 | 112 | 6.7 |
| Copolymer 4 | 117 | 90 | 13 |

As shown in Table 4, both copolymers 3 and 4 were found to have water and oil repellency equal to or greater than that of existing fluoropolymers.

## Claims

1. A fluoroalkene copolymer comprising a structure represented by the following general formula (1): 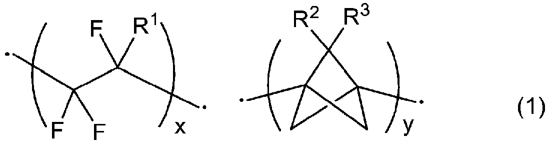 wherein R¹ is a fluorine atom, a perfluoroalkyl group having 1 to 10 carbon atoms which may have -O- between carbon atoms, or a perfluoroalkoxy group having 1 to 10 carbon atoms which may have -O- between carbon atoms; R² and R³ each independently represent a hydrogen atom, a halogen atom, an aliphatic hydrocarbon group having 1 to 30 carbon atoms which may have a substituent, or an aryl group which may have a substituent; said R² and R³ may be linked with each other to form a ring; said aliphatic hydrocarbon group may contain one or more selected from the group consisting of -O-, -Si(CH₃)₂-, -CO-, and -NH- between carbon atoms; x and y represent a proportion of each monomer contained (x + y = 100(%), x and y are each in ranges of 10 ≤ x, y < 90); and a filled circle represents a bond.

2. The fluoroalkene copolymer according to Claim 1, wherein said R² and R³ are both hydrogen atoms.

3. The fluoroalkene copolymer according to Claim 1, wherein said R¹ is a fluorine atom or a perfluoroalkoxy group having 1 to 10 carbon atoms and having -O- between carbon atoms.

4. A method for producing a fluoroalkene copolymer, the method comprising producing a fluoroalkene copolymer having a structure represented by the following general formula (1) by subjecting a compound represented by the following general formula (2) and a compound represented by the following general formula (3) to radical polymerization, 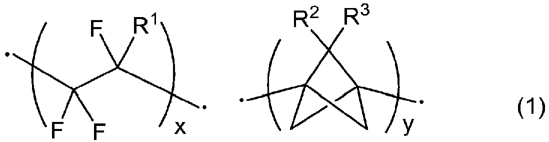
wherein R¹, R², and R³ are the same as defined above; x and y represent a proportion of each monomer contained (x + y = 100(%), x and y are in ranges of 10 ≤ x, y ≤ 90), respectively; and a filled circle represents a bond, 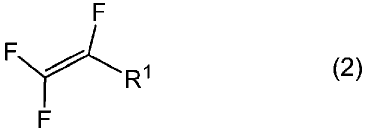
wherein R¹ is a fluorine atom, a perfluoroalkyl group having 1 to 10 carbon atoms which may have -O- between carbon atoms, or a perfluoroalkoxy group having 1 to 10 carbon atoms which may have -O- between carbon atoms, 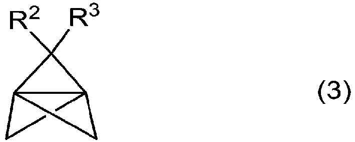
wherein R² and R³ each independently represent a hydrogen atom, a halogen atom, an aliphatic hydrocarbon group having 1 to 30 carbon atoms which may have a substituent, or an aryl group which may have a substituent; said R² and R³ may be linked with each other to form a ring; and said aliphatic hydrocarbon group may contain one or more selected from the group consisting of -O-, -Si(CH₃)₂-, -CO-, and -NH- between carbon atoms.

5. The method for producing a fluoroalkene copolymer according to Claim 4, wherein said radical polymerization is carried out at -30°C or lower.
